Europäisches Patentamt

European Patent Office

Office européen des brevets

(19)

(11) Veröffentlichungsnummer: **0 083 583**

**B1**

(12) # EUROPÄISCHE PATENTSCHRIFT

(45) Veröffentlichungstag der Patentschrift:
**12.08.87**

(51) Int. Cl.⁴: **C 08 G  12/34,** C 08 G  12/42,
C 08 L  61/30, C 08 L  61/32

(21) Anmeldenummer: **82900361.5**

(22) Anmeldetag: **25.01.82**

(86) Internationale Anmeldenummer:
**PCT/EP 82/00013**

(87) Internationale Veröffentlichungsnummer:
**WO 82/02717 (19.08.82 Gazette 82/20)**

(54) **MELAMINHARZE, VERFAHREN ZU IHRER HERSTELLUNG UND IHRE VERWENDUNG, SOWIE AUS DEN HARZEN HERGESTELLTE FORMMASSEN.**

(30) Priorität: **09.02.81  DE 3104420**

(43) Veröffentlichungstag der Anmeldung:
**20.07.83 Patentblatt 83/29**

(45) Bekanntmachung des Hinweises auf die Patenterteilung:
**12.08.87 Patentblatt 87/33**

(84) Benannte Vertragsstaaten:
**AT CH DE FR GB LI NL SE**

(56) Entgegenhaltungen:
**EP-A-0 006 148**
**FR-A-974 513**
**GB-A-1 405 269**
**GB-A-1 575 667**

(73) Patentinhaber: **CASSELLA Aktiengesellschaft,
Hanauer Landstrasse 526, D-6000 Frankfurt am
Main 61 (DE)**

(72) Erfinder: **HÖNEL, Hans, Meerholzer Strasse 42,
D-6000 Frankfurt am Main 61 (DE)**
Erfinder: **MICHEL, Walter, Fuldaer Strasse 27,
D-6000 Frankfurt am Main 61 (DE)**
Erfinder: **PIESCH, Steffen, An der Heide 32, D-6370
Oberursel 1 (DE)**
Erfinder: **SCHLÜTER, Karin, Dieburger Strasse 12c,
D-6000 Frankfurt am Main (DE)**
Erfinder: **WOLF, Alfons, Einhardstrasse 32, D-6453
Seligenstadt (DE)**

(74) Vertreter: **Urbach, Hans- Georg, Dr., Hanauer
Landstrasse 526, D-6000 Frankfurt am Main 61 (DE)**

## 0 083 583

**Beschreibung**

Die Erfindung betrifft Melaminharze in Pulverform mit einem Molverhältnis Melamin: Formaldehyd = 1: (1,27 bis 0,7), die mit Glykoläthern und/oder p-Toluolsulfonamid modifiziert sind und die eine begrenzte Wasserverdünnbarkeit besitzen, ein Verfahren zu ihrer Herstellung und ihre Verwendung zur Herstellung von Formmassen, sowie aus den Harzen hergestellte Formmassen.

Melaminharze werden durch Umsetzung von Melamin und Formaldehyd bergestellt. Sie finden wegen ihrer Eigenschaft, irreversibel auszuhärten, breite technische Anwendung, zum Beispiel zur Herstellung von härtbaren Formmassen, dekorativen Schichtstoffen, Textilveredelungsmitteln, Lacken und Leimen.

Aus härtbaren Formmassen werden durch Einwirkung mechanischer Kräfte innerhalb eines bestimmten Temperaturbereichs Formteile der verschiedensten Art, wie z. B. Küchengeschirr, Tabletts, Telefon-, Radio-, Uhren- und Fernsehgehäuse, Knöpfe, Armaturen, elektrische Isolierteile und ähnliches hergestellt. Bei der Herstellung von größeren Formteilen müssen geringe Werte für Verarbeitungsschwindung und Nachschwindung eingehalten werden, um eine einwandfreie Verarbeitung der Formteile zu ermöglichen und ein späteres Reißen der Formteile zu verhindern. Derartige Forderungen werden z. B. von Phenolharzformmassen, vor allem aber von Polyesterharz- und Epoxidharzformmassen erfüllt. Zum Teil sind die zu ihrer Herstellung erforderlichen Harze teuer, und die daraus hergestellten Formteile besitzen zum Teil noch unerwünschte thermoplastische Eigenschaften oder sind nicht ausreichend lösungsmittel- oder hitzebeständig. Formteile, die in der Elektroindustrie verwendet werden, wie z. B. Schalter, Knöpfe, Sicherungshalter, Chassisteile, Fassungen für Transistoren, integrierte Schaltkreise und dergleichen müssen darüber hinaus in ausreichendem Maße kriechstromfest sein. Formmassen, die auf der Basis von üblichen Melaminharzen hergestellt worden sind, zeigen bei der Aushärtung größere Nachschwindungswerte als zum Beispiel Formmassen auf der Basis von phenolharzen und vor allem von polyester- oder Epoxiharzen. Zur Herstellung von Formmassen bzw. Formteilen konnten übliche Melaminharze daher bisher nur dann verwendet werden, wenn die einzuhaltenden Toleranzen groß waren und die Erwärmung gering war. Es war zwar bekannt, daß durch Verwendung hoher Anteile spezieller anorganischer Füllmittel, zum Beispiel Aluminiumoxidhydrat (vergl. DE-A-23 56 298), Gesteinsmehl etc. die Nachschwindung bei der Herstellung der Formmassen verringert werden kann, jedoch müssen dabei meist schlechtere Fließeigenschaften bei der Verarbeitung der Formmassen in Kauf genommen werden.

Aus DE-A- 26 03 767 und DE-A-26 03 768 sind elektrolytfreie Melaminharze bekannt, aus denen Formteile mit hohem elektrischen Widerstand und hoher elektrischer Kriechstromfestigkeit hergestellt werden können. Die Verarbeitungs- und Nachschwindung der mit diesen bekannten Melaminharzen hergestellten Formmassen ist jedoch für die Herstellung größerer Formteile noch zu groß.

Aus GB-A-67 37 42 sind Melaminharze bekannt, die durch Kondensation von Melamin und Formaldehyd im Molverhältnis 1: (1 bis 1,7) in wäßriger Lösung bei einem pH-Wert von 7 bis 11 hergestellt werden und aus denen preßmassen hergestellt werden können, die nur noch eine Verarbeitungsschwindung von 0,69 % aufweisen.

Aus DE-A-28 24 473 sind teilverätherte, flüssige Melaminharze mit einem Molverhältnis Melamin: Formaldehyd = 1: (1,25 bis 1,0) bekannt, aus denen Formmassen hergestellt werden können, die nur noch eine minimale Verarbeitungs- und Nachschwindung zeigen. Bei der Herstellung dieser Harze werden Glykole und Glykoläther in Mengen von mehr als 26 Gew.%, z. B. 34 bis 45 Gew.%, bezogen auf den Festkörpergehalt des Harzes, eingesetzt. Die fertigen flüssigen Harze enthalten von ihrer Herstellung deshalb noch so hohe Anteile der hochsiedenden Glykoläther, daß sie nicht in Pulverharze überführt werden können, die bei der Herstellung von Formmassen bevorzugt werden. Außerdem hat sich gezeigt, daß die aus diesen Formmassen hergestellten Formteile für manche Zwecke ein ungenügendes Brandverhalten besitzen.

Es wurde nun gefunden, daß bei der Herstellung von Melaminharzen in Pulverform mit einem Molverhältnis Melamin: Formaldehyd = 1: (1,27 bis 0,7), die durch Gylkoläther modifiziert sind und die sich zur Herstellung von Preßmassen mit minimaler Verarbeitungs- und Nachschwindung eignen, der Gehalt an modifizierten Glykoläthern auf Mengen von 1 bis 25 Gew.% vorzugsweise auf Mengen von gleich oder weniger als 15 Gew.%, bezogen auf das Gesamtgewicht des eingesetzten Melamins und Formaldehyds (Formaldehyd 100%ig gerechnet) erniedrigt werden kann. Derartige Flüssigharze lassen sich, in an sich bekannter Weise, auch in Pulverharze überführen.

Die Erfindung betrifft modifizierte Melamin-Formaldehydharze in Pulverform mit einem Molverhältnis Melamin : Formaldehyd = 1: (1,27 bis 0,7) und einem Gehalt von 1 bis 25 Gew.%, bezogen auf das Gesamtgewicht Melamin und Formaldehyd (Formaldehyd 100%ig gerechnet) eines Glykoläthers oder mehrerer Glykoläther der Formel I

$$R(OCH_2CH_2)_n \, OH \quad (I)$$

worin R Alkyl mit 1 bis 4 C Atomen und n eine ganze Zahl von 1 bis 5 bedeutet, und/oder p-Toluolsulfonamid.

In der Formel I bedeutet R vorzugsweise Methyl, ganz besonders bevorzugt Ethyl und n bedeutet vorzugsweise 2, 3 oder 4. Das Molverhältnis Melamin: Formaldehyd der erfindungsgemäßen Harze beträgt vorzugsweise 1: (1,25 bis 1,01) und der Gehalt an Modifizierungsmitteln, Glykoläther der Formel I und/oder p-Toluolsulfonamid, beträgt vorzugsweise gleich oder weniger als 15 Gew.%, bezogen auf das Gesamtgewicht Melamin und Formaldehyd (Formaldehyd 100%ig gerechnet).

Die erfindungsgemäßen Melaminharze werden dadurch hergestellt, daß Melamin in wäßriger Lösung bzw. Suspension mit Formaldehyd im Molverhältnis Melamin: Formaldehyd-1: (1,27 bis 0,7), vorzugsweise 1: (1,25 bis 1,01) bei einem pH-Wert von 8 bis 11, vorzugsweise 8,5 bis 10,5, so lange auf Temperaturen von 105 bis 160°C, vorzugsweise 110 bis 130°C, erhitzt wird, bis eine Wasserverdünnbarkeit von 1: (0,1 bis 4), vorzugsweise 1: (0,1 bis 3), erreicht worden ist und daß vor, während oder nach der Kondensation, bezogen auf das Gesamtgewicht an eingesetztem Melamin und Formaldehyd (Formaldehyd 100% gerechnet), 1 bis 25 Gew.% vorzugsweise gleich oder weniger als 15 Gew:% eines Glykoläthers oder mehrerer Glykoläther der Formel I und/oder p-Toluolsulfonamid zugesetzt werden und das erhaltene flüssige Harz anschließend in an sich bekannter Weise in ein Pulverharz überführt wird.

Da die Reaktionstemperaturen über dem Siedepunkt des Wassers liegen, wird die Herstellung der erfindungsgemäßen Harze in einem geschlossenen Druckgefäß unter dem sich bei der Kondensation einstellenden Überdruck, zweckmäßigerweise unter Rühren, vorgenommen. Der Formaldehyd wird normalerweise in Form der üblichen 39%igen wäßrigen Lösung eingesetzt. Aber auch wäßrige Lösungen von Paraformaldehyd oder höher oder niedriger konzentrierte Formaldehydlösungen können eingesetzt werden. Die Konzentration des Formaldehyds in der wäßrigen Lösung des Reaktionsansatzes kann 10 bis 60 Gew.%, vorzugsweise 20 bis 40 Gew.%, betragen.

Bei den angegebenen Reaktionsbedingungen tritt eine verhältnismäßig rasche Auflösung des Melamins ein. Zum Beispiel ist bei 20 bis 25 molaren Ansätzen das Melamin schon nach 5 bis 10 Minuten aufgelöst. Nacn der Auflösung des Melaminsnimmt bei weiterer Kondensation die Wasserverdünnbarkeit des Ansatzes ab. Es wird normalerweise so lange weiterkondensiert, bis die fertige Harzlösung eine Wasserverdünnbarkeit von 1: (0,1 bis 4), vorzugsweise 1: (0,1 bis 3), erreicht hat. Bei der Bestimmung der Wasserverdünnbarkeit wird bekanntlich ein abgemessenes Volumen Harz bei einer Temperatur von 20°C bis zum Auftreten einer dauernden Trübung mit Wasser titriert. Die Angabe Wasserverdünnbarkeit 1: 0,1 besagt somit zum Beispiel, daß beim Vermischen von 1 Volumenteil Harz mit 0,1 Volumenteil Wasser eine dauernde Trübung eintritt. Wenn man ein Harz mit einer Wasserverdünnbarkeit von zum Beispiel 1: 0,1 herstellen will, darf man jedoch nicht so lange kondensieren, bis eine Harzprobe diese Wasserverdünnbarkeit zeigt, sondern man muß die Kondensation bereits vorher durch rasche Erniedrigung der Temperatur abbrechen, weil während der Abkühlung noch eine Nachkondensation eintritt. Die Wasserverdünnbarkeit, bei der die Kondensation abzubrechen ist, kann leicht durch Vorversuche bestimmt werden.

Der pH-Wert von 8 bis 11, vorzugsweise 8,5 bis 10,5, wird durch Zusatz von geeigneten alkalisch reagierenden anorganischen oder organischen Verbindungen eingestellt. Derartigeeignete anorganische Verbindungen sind zum Beispiel Alkalihydroxide, wie Natrium-, Kalium- oder Lithiumhydroxid; Alkalicarbonate, wie Natrium- oder Kaliumcarbonat. Geeignete organische Verbindungen sind zum Beispiel tertiäre Aminoalkohole, wie z. B. N,N-Dimethylaminoethanol, N,-N-Diethyl-Aminoethanol, N,N-Dipropylaminoethanol, N,N-Dimethyl-, -diethyl- oder -dipropylaminopropanol. Auch Mischungen verschiedener geeigneter alkalisch reagierender Verbindungen können eingesetzt werden, wie zum Beispiel ein Gemisch aus Kaliumcarbonat und N,N-Dimethylaminoethanol. Die zur Einstellung des pH-Wertes benutzten Verbindungen können dem Reaktionsansatz selbstverständlich auch in Form einer wässrigen Lösung zugesetzt werden. Zur Einstellung des pH-Wertes sind normalerweise zum Beispiel von den Alkalihydroxiden 0,06 bis 0,1 Gew.% und den tertiären Aminoalkoholen ca. 0,5 bis 2 Gew.%, bezogen auf das Gewicht des Melamins, erforderlich.

Die zur Modifizierung benutzten Glykoläther der Formel I und/oder das p-Toluolsulfonamid werden dem Reaktionsansatz vor, während oder nach der Kondensation zugesetzt. Zweckmäßigerweise wird mindestens ein Teil der benutzten Glykoläthermenge und/oder des p-Toluolsulfonamids z. B. 50 %, vor dem Beginn der Kondensation zugesetzt. Die zur Modifizierung benutzte Menge des Glykoläthers der Formel I und/oder des p-Toluolsulfonamids beträgt 1 bis 25 Gew.%, vorzugsweise 2 bis 15 Gew.%, bezogen auf das Gesamtgewicht an eingesetztem Melamin und Formaldehyd (Formaldehyd 100% gerechnet). Anstelle eines einzigen Glykoläthers kann auch ein Gemisch verschiedener Glykoläther der Formel I eingesetzt werden. Besonders bewährt hat sich dabei ein technisches Gemisch aus 70 Gew.% Ethyldiglykol, 20 Gew.% Ethyltriglykol und 10 Gew.% Ethyltetraglykol, das auch als "Ethylpolyglykol" bezeichnet wird.

Die nach der vorliegenden Erfindung herstellbaren Harze können auch noch durch weitere Modifizierungsmittel modifiziert werden. Auch die weiteren an sich bekannten Modifizierungsmittel können vor, während oder nach beendeter Kondensation zugesetzt werden. Etwaige geeignete weitere Modifizierungsmittel sind beispielsweise Glykole wie Ethylenglykol, Propylenglykol-1,2 und Propylenglykol-1,3, Butan-diol-1,2, Butandiol-1,3 und Butandiol-1,4, Ethylendiglykol, Ethylentriglykol, Ethylentetraglykol, Dipropylenglykol, Tripropylenglykol, Tetrapropylenglykol, Polyethylenglykole, ferner Polyglyzerin, Trimethylolpropan, Pentaerythrit; Zucker, wie Glucose; ferner Alkohole wie Methanol, Ethanol; Lactame, wie ε-Caprolactam; Methylenbisformamid; Umsetzungsprodukt aus Formaldehyd, Formamid und ε-Caprolactam. Als Modifizierungsmittel können auch andere Aminoplastbildner und ihre Derivate, zum Beispiel Harnstoff, Thioharnstoff, Propylenharnstoff, Ethylenharnstoff, Glyoxalharnstoff, Formoguanamin, Acetoguanamin, Benzoguanamin, Adipo-bisguanamin etc. verwendet werden. Werden Amidosulfosäure oder ihre Salze zur zusätzlichen Modifizierung verwendet, dann kommen hiervon höchstens 1 Gew.%, vorzugsweise höchstens 0,5 Gew.%, bezogen das Gesamtgewicht Melamin + Formaldehyd (100%ig) zum Einsatz. Bei den maximal zur Anwendung kommenden Mengen an Modifizierungsmitteln ist auch bei Verwendung von Alkoholen, Glykolen oder Glykolethern sichergestellt, daß noch praktisch unverätherte Harze erhalten werden.

Die flüssigen Harze besitzen einen Festkörpergehalt von 50 Gew.% und mehr und können in an sich bekannter Weise durch Trocknung, zum Beispiel durch Sprühtrocknung, in pulverförmige Harze überführt werden. Die Anwendung der erfindungsgemäßen Harze erfolgt in Pulverform.

3

Das erfindungsgemäße Verfahren zur Herstellung der Harze garantiert durch die Vornahme der Kondensation in einem geschlossenen System absolute Umweltfreundlichkeit. Nach Erreichen der Reaktionstemperatur verläuft die Kondensation innerhalb von 20 bis 50 Minuten rasch. Durch die dadurch bedingte Reduzierung der Belegzeiten der Reaktions gefäße und des Verbrauchs an Heizenergie tritt eine Verbilligung der Herstellkosten ein.

Die erfindungsgemäßen Harze sind auch bei der Weiterverarbeitung geruchsarm und damit bei ihrer Handhabung und Verwendung umweltfreundlich und eignen sich für alle Einsatzzwecke, für die bisher Melaminharze verwendet wurden. Besonders sind sie sowohl in flüssiger als auch vorzugsweise in fester Form zur Herstellung von Formmassen geeignet.

Die Herstellung der Formmassen erfolgt in an sich bekannter Weise dadurch, daß die Harze in flüssiger oder vorzugsweise in fester Form mit Füllstoffen, Gleitmitteln und gegebenenfalls Fließhilfsmitteln und pigmenten gemischt werden und durch Einwirkung von Wärme ein bestimmter Kondensationsgrad eingestellt wird. Geeignete Füllstoffe sind beispielsweise Holzmehl, Cellulosepulver, Celluloseesterpulver, Gesteinsmehl, Glasmehl, Baumwollflocken, Baumwollfasern, Baumwollgewebeschnitzel, Mehl, Stärke, Torf, Asbestfasern, Glimmer oder Graphit, wovon die beiden erstgenannten bevorzugt sind. Pigmente können organisch oder anorganisch sein. Geeignete anorganische Pigmente basieren im allgemeinen auf Sulfiden, Oxiden oder Mischoxiden von Metallen, insbesondere von Titan, Zink, Eisen, Chrom, Kobalt, Blei und Cadmium. Ein bevorzugtes schwarzes Pigment ist Ruß. Als organische Pigmente kommen die im Colour Index als Pigment Dyes gekennzeichneten Verbindungen in Betracht.

Bekannte Fließhilfsmittel sind Sorbit, Glykole und Glykolderivate und Polyglykole. Als Gleit- oder Trennmittel, die für die einwandfreie Ablösung des Formkörpers von der Preßform erforderlich sind, werden Metallstearate, vorzugsweise Zink-, Calcium- und Magnesiumstearat, eingesetzt.

Das Mischen der erfindungsgemäßen Melamin-Formaldehyd-Harze mit dem Füllmaterial und gegebenenfalls den weiteren Zusatzstoffen erfolgt in an sich bekannter Weise, im allgemeinen nach dem sogenannten Trockenverfahren oder dem sogenannten Naßverfahren. Bei dem Trockenverfahren (auch Schmelzimprägnierverfahren genannt) werden normalerweise 35 bis 60 Gewichtsteile des pulverförmigen Harzes mit 65 bis 40 Gewichtsteilen der Füllstoffe sowie ca. 1 Gewichtsteil Gleitmittel, ferner gegebenenfalls Fließhilfsmittel und Pigmente in einem Mischaggregat gemischt. Die erhaltene Mischung wird anschließend auf einem Walzenmischer bei Temperaturen der sogenannten Fellwalze von 100 - 140°C und der zweiten Kalanderwalze von 70-100°C zu einem Walzfell kalandriert. Während der Kalandrierung erfolgt eine homogene Imprägnierung der Füllstoffe mit dem aufschmelzenden Harz, wobei gleichzeitig der Kondensationsgrad der entstehenden Formmasse ansteigt. Die Umwandlung der Rohmischung in die Formmasse dauert normalerweise 1 bis 3 Minuten. Nach Erreichen des gewünschten Kondensationsgrades wird die homogene plastische Masse von der Fellwalze abgestreift, abgekühlt und anschließend zerkleinert, z. B. granuliert und gemahlen.

Zur Herstellung von Formmassen nach dem Naßverfahren werden die Pulverharze zunächst in Wasser gelöst, oder die flüssigen Harze werden direkt eingesetzt. Der Festkörpergehalt der Harzlösungen liegt in der Regel bei 50 - 70 %. Es wird zunächst aus der Harzlösung, den Füll- und den an deren Zusatzstoffen eine wäßrige Rohmischung hergestellt. Die anzuwendende Rezeptur (bezogen auf Festharz) entspricht der für das Trockenverfahren angegebenen Rezeptur. Die wässrige Rohmischung wird zum Beispiel mittels einer Mischschnecke in ein Feuchtgranulat überführt, das dann bei Temperaturen von 50 bis 100°C auf eine Restfeuchte von 2 bis 6 % entwässert wird. Dabei erfolgt gleichzeitig die Einstellung des gewünschten Kondensationsgrades.

Aus den Formmassen können durch Verformung und Einwirkung von Temperaturen von 100 bis 180°C und Drucken von 150-800 bar, vorzugsweise 200 - 400 bar, Formteile der verschiedensten Art hergestellt werden. Die Herstellung der Formteile erfolgt in an sich bekannter Weise zum Beispiel nach dem Formpreßverfahren, dem Spritzpreß- oder Transferpressverfahren oder dem Spritzgießverfahren.

Beim Formpreßverfahren wird die Formmasse in granulierter oder tablettierter Form in den Hohlraum eines beheizbaren Preßwerkzeuges eingegeben. Nach Schließen des Preßwerkzeuges erfolgt bei Temperaturen von zum Beispiel 120 - 170°C und Drucken von 200 bis 400 bar die Ausbildung des Formteils, das nach der Entformung noch entgratet werden muß. Beim Spritzpreß- oder Transferverfahren wird die Formmasse zunächst in einem Schneckenextruder bei erhöhtem Druck und erhöhter Temperatur vorplastifiziert und in Form eines Stranges ausgestossen. Der Strang wird noch heiß portioniert, und die Portionen fallen sofort in geöffnete Preßwerkzeuge, in denen sie bei erhöhtem Druck und erhöhter Temperatur zu Formteilen ausgeformt werden.

Bei dem Spritzgießverfahren wird die Formmasse zunächst ebenfalls in einem Schmeckenextruder plastifiziert, dann jedoch über Fließkanäle in geschlossene Werkzeugformen eingespritzt, in denen bei Temperaturen von 120 - 170°C und Drucken von 200 bis 400 bar die Endaushärtung erfolgt.

Die Preßdauer bei der Herstellung der Formteile beträgt üblicherweise 30 Sekunden bis 5 Minuten.

Die mit den erfindungsgemäßen Harzen hergestellten Formmassen zeigen ein hohes Fließvermögen, sind jedoch weniger reaktiv als Formmassen, die aus Harzen mit höherem Formaldehydanteil hergestellt worden sind. Deshalb kann es gegebenenfalls zweckmäßig sein, bei der Herstellung der Formmassen an sich bekannte Härter zuzusetzen, um bei der späteren Aushärtung die Härtungsgeschwindigkeit zu beschleunigen, ohne daß die Schmelzviskosität wesentlich erhöht wird. Geeignete Härter sind zum Beispiel: Melaminsalze organischer Säuren, wie z. B. Melaminphthalat, Melaminoxalat, Melaminacetat, Morpholinsalz der p-Toluolsulfonsäure,

4

Arylsulfonsäureester, wie z. B. p-Toluolsulfonsäure-methyl-, -ethyloder -phenylester, Bernsteinsäure-anhydrid, Phthalsäureanhydrid, Maleinsäure-anhydrid, Benzoltetracarbonsäure-anhydrid, Polyphosphorsäureester oder ein Gemisch aus Ameisensäure und Wasserstoffperoxid. Die Ameisensäure ist dabei in der Regel 85%ig, das Wasserstoffperoxid 30%ig, und das Mischungsverhältnis Ameisensäure: Wasserstoffperoxid beträgt 1: 0,75.

Formmassen, die mit den erfindungsgemäßen Harzen hergestellt worden sind, zeigen bessere Werte für die Verarbeitungs- und Nachschwindung (z. B. die Nachschwindung beträgt $\leq$ 0,4 %) als Formmassen auf Basis konventioneller Melaminharze und besseres Brandverhalten als die Formmassen auf der Basis der Harze der DE-A-28 24 473. Die mechanischen Eigenschaften der mit den erfindungsgemäßen Harzen hergestellten Formteile erfüllen die Anforderungen der DIN-Normen.

An Hand der nachfolgenden Beispiele wird die Erfindung weiter erläutert. Angegebene Prozente sind Gewichtsprozente.

**Beispiel 1:**

In ein verschließbares, druckfestes 20-Liter-Gefäß aus rostfreiem Stahl, versehen mit Rührer, Thermometer, Schauglas, Beleuchtung, Heiz- und Kühlvorrichtung, Sicherheitsventil 5 bar, Manometer, Einfüllstutzen und Bodenventil wurden 2577 g destilliertes Wasser, 1923 g wäßrige 39%ige Formaldehydlösung, 3000 g Melamin (Molverhältnis Melamin: Formaldehyd 1: 1,05), 37 g N,N-Dimethylaminoethanol (im nachfolgenden Dimethylethanolamin oder DMEA genannt) und 350 g Ethyltriglykol eingetragen. Der pH-Wert betrug 10,1. Nach dem Verschließen des Gefäßes wurde unter Rühren auf eine Temperatur von 120°C aufgeheizt. Nach Erreichen der Kondensationstemperatur von 120°C löste sich das Melamin innerhalb von 6 Minuten auf. Es wurde noch 12 Minuten bei einer Temperatur von 120 bis 125°C unter Rühren weiterkondensiert, bis das Harz eine Wasserverdünnbarkeit bei betrug dabei 2,0 bis 2,5 bar. Durch Einschaltung der Kühlung wurde die Kondensation beendet. Die erhaltene klare Harzlösung besaß eine Wasserverdünnbarkeit bei 20°C von 1: 0,25 und einen Festkörpergehalt von 50 %.

Ein Teil der erhaltenen Harzlösung wurde in dünner Schicht bei einer Temperatur von 50°C im Wasserstrahlvakuum getrocknet und anschließend pulverisiert.

In analoger Weise wurden weitere Harze unter den in der Tabelle 1 angegebenen Bedingungen hergestellt.

**Tabelle 1**

| Nr. | Molverhältnis Melamin : Formaldehyd | Modifizierungs-mittel | pH-Wert | Base zur pH-Einstellung | Kondensations-Temperatur in $^{0}$C | Überdruck bei der Kondensation in bar | Wasserver-dünnbarkeit bei $20^{0}$ C |
|---|---|---|---|---|---|---|---|
| 2 | 1 : 1,2 | 15% E,2% P [1] | 10,5 | KOH | 115-130 | 1,7 - 2,3 | 1 : 0,55 |
| 3 | 1 : 1,2 | 15% E,2% P | 9,2 | KOH | 115-119 | 1,3 - 1,6 | 1 : 0,5 |
| 4 | 1 : 1,2 | 10% E,2% P | 9,5 | KOH | 111-120 | 1,4 - 1,8 | 1 : 0,5 |
| 5 | 1 : 1,2 | 5% E,5% P | 9,4 | KOH | 115-116 | 1,4 - 1,6 | 1 : 1,1 |
| 6 | 1 : 1,2 | 15% E | 9,9 | DMEA | 114-119 | 1,5 - 1,8 | 1 : 0,6 |
| 7 | 1 : 1,2 | 5% P | 9,5 | KOH | 110-111 | 1,1 - 1,3 | 1 : 0,75 |
| 8 | 1 : 0,9 | 5% E, 5% P | 9,8 | KOII | 110-125 | 1,3 - 2,2 | 1 : 0,4 |
| 9 | 1 : 0,8 | 19% E, 5% P | 10,1 | DMEA | 108-130 | 1,0 - 2,8 | 1 : 0,1 |
| 10 | 1 : 1,05 | 10% E | 9,9 | DMEA | 116-117 | 1,6 - 1,8 | 1 : 0,6 |

[1] nachträglich zugesetzt
E - "Ethylpolyglykol" - P - p-Toluolsulfonamid
70 Gew.% Ethyldiglykol
20 Gew.% Ethyltriglykol
10 Gew.% Ethyltetraglykol

Zur Bestimmung der Nachschwindung gemäß DIN 53 464 und der Kriechstromfestigkeit gemäß DIN 53 480 wurden Formmassen Typ 152 und Typ 182 gemäß DIN 7708 hergestellt. Die Herstellung der Formmassen Typ 152 wurde nach folgender Vorschrift vorgenommen:

70 Teile Harz, 30 Teile Cellulose, 1 Teil Zinkstearat und X Teile Härter werden auf einem Walzenstuhl bei 110° C zu einem Walzfell ausgewalzt. Nach dem Granulieren des Walzfelles wird in einer Normstabform bei 150 bis 155°C, 250 bar und 8 Minuten Preßdauer ein Formkörper hergestellt. Die Härtermengen und die an den hergestellten Normstäben erhaltenen Ergebnisse sind in der Tabelle 2 zusammengestellt.

Die Herstellung der Formmassen Typ 182 erfolgte analog, nur wurde hier ein Gemisch eines erfindungsgemäßen Harzes mit einem Phenolharz eingesetzt.

**Tabelle 2**

| Harz Nr. | Eingesetzt als | Härter | Formmassen Typ gemäß DIN 7708 | Nachschwindung gemäß DIN 53 464 in% | Kriechstromfestigkeit gemäß DIN 53 480 |
|---|---|---|---|---|---|
| 1 | P | | 182 | 0,35 | KC 600 bzw. KA3c |
| 2 | P | 1% PA | 152 | 0,11 | KC 600 bzw. KA3c |
| 3 | F | 1% M | 152 | 0,35 | KC 600 bzw. KA3c |
| 4 | P | 0,65% M | 152 | 0,3 | KC 600 bzw. KA3c |
| 5 | P | 1% M | 152 | 0,4 | KC 600 bzw. KA3c |
| 6 | F | - | 152 | 0,3 | KC 600 bzw. KA3c |
| 7 | P | - | 152 | 0,4 | KC 600 bzw. KA3c |
| 8 | P | 1% M | 152 | 0,36 | KC 600 bzw. KA3c |
| 9 | P | 1,5% PA | 152 | 0,4 | KC 600 bzw. KA3b |

P - Pulverharz (erfindungsgemäß)   PA - Phthalsäureanhydrid
F - Flüssigharz (nicht erfindungsgemäß)   M - Melaminphthalat

**Patentansprüche**

1. Modifizierte Melamin Formaldehyd-Harze in Pulverform mit einem Molverhältnis Melamin : Formaldehyd = 1: (1,27 bis 0,7) und einem Gehalt von 1 bis 25 Gew.% bezogen auf das Gesamtgewicht Melamin und Formaldehyd (Formaldehyd 100%ig gerechnet) eines Glykolethers oder mehrerer Glykolether der Formel I

R (OCH$_2$CH$_2$)$_n$ OH (I)

worin R Alkyl mit 1 bis 4 C Atomen und n eine ganze Zahl von 1 bis 5 bedeutet, und/oder p-Toluolsulfonamid.

2. Melamin-Formaldehyd-Harze nach Anspruch 1, gekennzeichnet durch ein Molverhältnis Melamin: Formaldehyd 1: (1,25 bis 1,01).

3. Melamin-Formaldehyd-Harze nach den Ansprüchen 1 oder 2, gekennzeichnet durch eine Wasserverdünnbarkeit von 1: (0,1 bis 4), vorzugsweise 1: (0,1 bis 3).

4. Melamin-Formaldehyd-Harze nach einem oder mehreren der Ansprüche 1 bis 3, gekennzeichnet durch einen Gehalt von 2 bis 15 Gew.% eines Glykolethers oder mehrerer Glykolether der Formel I und/oder von p-Toluolsulfonamid.

5. Melamin-Formaldehyd-Harze nach einem oder mehreren der Ansprüche 1 bis 3, dadurch gekennzeichnet, daß sie, bezogen auf die bei ihrer Herstellung zur Anwendung kommenden Mengen Melamin-Formaldehyd 1 bis 25 Gew.%, vorzugsweise 2 bis 15 Gew.%; Modifizierungsmittel, dabei jedoch höchstens 1 Gew.% Amidosulfosäure oder ihrer Salze, vorzugsweise jedoch höchstens 0,5 Gew.% Amidosulfosäure oder ihrer Salze, enthalten.

6. Verfahren zur Herstellung der Melamin-Formaldehyd-Harze nach den Ansprüchen 1 bis 5, dadurch gekennzeichnet, daß Melamin in wäßriger Lösung bzw. Suspension mit Formaldehyd in einem Molverhältnis Melamin: Formaldehyd = 1: (1,,7 bis O,7), vorzugsweise 1: (1,25 bis 1,01) bei einem pH-Wert von 8 bis 11 so lange auf Temperaturen von 105 bis 160°C erhitzt wird, bis das fertige Harz bei 20°C eine Wasserverdünnbarkeit von 1: (0,1 bis 4) erreicht hat und worauf das flüssige Harz in an sich bekannter Weise in ein Pulverharz überführt wird und daß vor, während oder nach der Kondensation 1 bis 25 Gew.%, bezogen auf das Gesamtgewicht an Melamin und Formaldehyd (Formaldehyd 100%ig gerechnet) eines Glykolethers oder mehrerer Glykolether der Formel I

R (OCH$_2$CH$_2$)$_n$ OH (I)

worin R Alkyl mit 1 bis 4 C Atomen und n eine ganze Zahl von 1 bis 5 bedeutet, und/oder p-Toluolsulfonamid zugesetzt wird.

7. Verfahren nach Anspruch 6, dadurch gekennzeichnet, daß die Kondensation bei Temperaturen von 110 bis 130°C durchgeführt wird.

8. Verfahren nach den Ansprüchen 6 oder 7, dadurch gekennzeichnet, daß die Kondensation bei einem pH-Wert von 8,5 bis 10,5 durchgeführt wird.

9. Verwendung der Harze der Ansprüche 1 bis 5 bzw. der nach einem oder mehreren der Ansprüche 6 bis 8 hergestellten Harze zur Herstellung von Formmassen in an sich bekannter Weise.

10. Formmasse, erhältlich durch Mischen von 35 bis 60 Gewichtsteilen eines Harzes (als Festkörper gerechnet) eines oder mehrerer der Ansprüche 1 bis 5 bzw. nach einem oder mehreren der Ansprüche 6 bis 8 hergestellt, 65 bis 40 Gewichtsteilen Füllstoff, ca. 1 Gewichtsteil Gleitmittel, ferner ggf. Fließhilfsmittel, Pigment und Härter und anschließende 1 bis 3 Minuten lange Kalandrierung bei 70 bis 140°C, Abkühlung und Zerkleinerung.

**Claims**

1. Modified melamine-formaldehyde resins in powder form having a melamine: formaldehyde molar ratio of 1: (1.27 to 0.7) and a content of 1 to 25 % by weight, relative to the total weight of melamine and formaldehyde (formaldehyde being calculated as 100 % strength) of a glycol ether or several glycol ethers of the formula I

R(OCH$_2$CH$_2$)$_n$ OH (I)

in which R denotes alkyl having 1 to 4 C atoms and n denotes an integer from 1 to 5, and/or of p-toluenesulphonamide.

2. Melamine-formaldehyde resins as claimed in claim 1, characterised by a melamine: formaldehyde molar ratio of 1: (1.25 to 1.01).

3. Melamine-formaldehyde resins as claimed in claim 1 or 2, characterised by a dilutability with water of 1: (0.1 to 4), preferably 1: (0.1 to 3).

4. Melamine-formaldehyde resins as claimed in one or several of claims 1 to 3, characterised by a content of 2 to 15 % by weight of a glycol ether or several glycol ethers of formula I and/or of p-toluenesulphonamide.

5. Melamine-formaldehyde resins as claimed in one or more of claims 1 to 3, characterised in that, relative to the quantities of melamine-formaldehyde used for their production, they contain 1 to 25 % by weight, preferably 2 to 15 % by weight, of modifying agents, but in this respect not more than 1 % by weight of sulphamic acid or salts thereof, and preferably not more than 0.5 % by weight of sulphamic acid or salts thereof.

6. A process for the preparation of the melamineformaldehyde resins as claimed in any of claims 1 to 5, characterised in that melamine is heated in an aqueous solution or suspension with formaldehyde in a melamine : formaldehyde molar ratio of 1: (1.27 to 0.7), preferably 1: (1.25 to 1.01) at a pH value of 8 to 11 and at temperatures of 105 to 160°C until the finished resin has reached a dilutability with water of 1: (0.1 to 4) at 20°C, and whereupon the liquid resin is converted into a pulverulent resin in a manner known per se and that before, during or after the condensation reaction 1 to 25 % by weight, relative to the total weight of melamine and formaldehyde (formaldehyde being calculated as 100 % strength) of a glycol ether or several glycol ethers of the formula I

$R(OCH_2CH_2)_n OH$ (I)

wherein R denotes alkyl having 1 to 4 C atoms and n denotes an integer from 1 to 5, and/or p-toluenesulphonamide are added.

7. The process as claimed in claim 6, characterised in that the condensation reaction is carried out at temperatures of 110 to 130°C.

8. The process as claimed in claim 6 or 7, characterised in that the condensation reaction is carried out at a pH value of 8.5 to 10.5.

9. The use of the resins as claimed in any of claims 1 to 5 or of the resins prepared as claimed in one or more of claims 6 to 8 for the production of molding compositions in a manner which is in itself known.

10. A molding composition which can be obtained by mixing 35 to 60 parts by weight of a resin (calculated as solid) as claimed in one or more of claims 1 to 5 or prepared as claimed in any of claims 6 to 8, 65 to 40 parts by weight of filler, approx. 1 part by weight of lubricant and also, if appropriate, flow assistant, pigment and curing agent, and subsequently calendering the mixture for 1 to 3 minutes at 70 to 140°C, cooling and comminution.

## Revendications

1. Résines mélamine/formaldéhyde modifiées, à l'état pulvérulent, dans lesquelles le rapport molaire de la mélamine au formaldéhyde est compris entre 1:1,27 et 1:0,7 et qui contiennent de 1 à 25 à en poids, par rapport au poids de l'ensemble constitué par la mélamine et le formaldéhyde (formaldéhyde considéré à 100 %), d'un éther de glycol ou de plusieurs éthers de glycols répondant à la formule I:

$R (OCH_2CH_2)_n OH$ (I)

dans laquelle R représente un radical alkyle contenant de 1 à 4 atomes de carbone et n un nombre entier de 1 à 5, et/ou de p-toluène-sulfonamide.

2. Resines mélamine/formaldéhyde selon la revendication 1, caractérisées en ce que le rapport molaire de la mélamine au formaldéhyde est compris entre 1:1,25 et 1:1,01.

3. Résines mélamine/formaldéhyde selon l'une des revendications 1 et 2, caractérisées en ce qu'elles ont une diluablité à l'eau comprise entre 1:0,1 et 1:4, de préférence entre 1:0,1 et 1:3.

4. Résines mélamine/formaldéhyde selon l'une quelconque des revendications 1 à 3, caractérisées en ce qu'elles contiennent de 2 à 15 % en poids d'un éther de glycol ou de plusieurs éthers de glycols de formule I et/ou de p-toluène-sulfonamide.

5. Résines mélamine/formaldéhyde selon l'une quelconque des revendications 1 à 3, caractérisées en ce qu'elles contiennent, par rapport aux quantités de mélamine et de formaldéhyde mises en jeu pour leur préparation, de 1 à 25 % en poids, de préférence de 2 à 15 % en poids, d'agents modificateurs, mais au plus 1 % en poids d'acide sulfamique ou de ses sels, de préférence toutefois au plus 0,5 % en poids d'acide sulfamique ou de ses sels.

6. Procédé pour préparer des résines mélamine/formaldéhyde selon l'une quelconque des revendications 1 à 5, procédé caractérisé en ce qu'on chauffe la mélamine, sous la forme d'une solution ou d'une suspension aqueuse, avec le formaldéhyde dans un rapport molaire de la mélamine au formaldéhyde compris entre 1:1,27 et 1:0,7, de préférence entre 1:1,25 et 1:1,01, à un pH de 8 à 11 et à des températures de 105 à 160°C, jusqu'à ce que la résine finie ait atteint,à 20°C, une diluabilité à l'eau comprise entre 1:0,1 et 1:4, puis on transforme la résine liquide, de manière connue, en une résine pulvérulente, et en ce qu'on ajoute, avant, pendant ou après la condensation, de 1 à 25 % en poids, par rapport au poids de l'ensemble formé par la mélamine et le formaldéhyde (formaldéhyde considéré à 100 %), d'un éther de glycol ou de plusieurs éthers de glycols répondant à la formule I:

$R (OCH_2CH_2)_n OH$ (I)

dans laquelle R représente un radical alkyle contenant de 1 à 4 atomes de carbone et n un nombre entier de 1 à 5, et/ou de p-toluène-sulfonamide.

7. Procédé selon la revendication 6, caractérisé en ce qu'on effectue la condensation à des températures de 110 à 130°C.

8. Procédé selon l'une des revendications 6 et 7, caractérisé en ce qu'on effectue la condensation à un pH de 8,5 à 10,5.

9. Application des résines selon l'une quelconque des revendications 1 à 5, ou des résines préparées selon l'une quelconque des revendications 6 à 8, pour la préparation de matières à mouler, cela de manière connue.

10. Matière à mouler que l'on peut obtenir en mélangeant de 35 à 60 parties en poids d'une résine (considérée comme une matière solide) selon une ou plusieurs des revendications 1 à 5, ou préparée selon une ou plusieurs des revendications 6 à 8, de 65 à 40 parties en poids d'une charge, environ 1 partie en poids d'un lubrifiant, et éventuellement un adjuvant d'écoulement, un pigment et un durcisseur, puis en calandrant pendant 1 à 3 minutes à une température de 70 à 140°C, en refroidissant et en broyant.